# EUROPÄISCHE PATENTSCHRIFT

(11) **EP 3 683 901 B1**
(45) Veröffentlichungstag und Bekanntmachung des Hinweises auf die Patenterteilung: **16.04.2025**
(21) Anmeldenummer: 19217817.6
(22) Anmeldetag: 19.12.2019
(51) Int. Cl.: H01R 27/02, H01R 25/00

(54) **MODULARES SYSTEM, UMFASSEND ELEKTRISCHE VERBRAUCHER UND EINE ELEKTRISCHE ANSCHLUSSEINHEIT**
MODULAR SYSTEM COMPRISING ELECTRICAL CONSUMERS AND AN ELECTRICAL CONNECTION UNIT
SYSTÈME MODULAIRE COMPRENANT UN CONSOMMATEUR ÉLECTRIQUE ET UNITÉ DE RACCORDEMENT ÉLECTRIQUE

(30) Priorität: 15.01.2019 DE 202019100202 U
(43) Veröffentlichungstag der Anmeldung: 22.07.2020
(73) Patentinhaber: Harbour Star International Ltd., Mongkok, Kowloon (HK)
(72) Erfinder: Schröder, Thorsten, Hong Kong (HK)
(74) Vertreter: Raffay & Fleck

(56) Entgegenhaltungen:
- WO-A1-01/52704
- DE-U1- 29 603 529

## Beschreibung

Die Erfindung betrifft ein modulares System, welches elektrische Verbraucher sowie eine elektrische Anschlusseinheit umfasst. Genauer betrifft die Erfindung ein solches modulares System, das die Merkmale des Oberbegriffs des Schutzanspruchs 1 aufweist.

Es ist bekannt, in Haushalten verschiedene elektrische Verbraucher, bzw. Elektrogeräte, zum Beispiel elektrische Küchengeräte, wie Toaster, Kaffeemaschinen, Küchenradios, Wasserkocher, Eierkocher oder dergleichen, an eine einzige Haushaltssteckdose anzuschließen, indem eine elektrische Anschlusseinheit mit einer elektrischen Anschluss- und Verteilerleiste in Form von insbesondere einer Mehrfachsteckdose, mit einem üblichen elektrischen Anschlussstecker, zum Beispiel einem Stecker nach dem Schuko-Standard gemäß CEE 7/4, CEE 7/6 und CEE 7/7, mit der Haushaltssteckdose verbunden wird und die einzelnen elektrischen Verbraucher mit ihren elektrischen Anschlusssteckern in die Einzeldosen der Mehrfachsteckdose eingesteckt und so elektrisch kontaktiert werden. Aus der DE 27 02 96 U1 ist ferner ein Zwischenadapter bekannt, der zwischen PC-Netzteil und Spannungsversorgung des Monitors an dem Netzteil angeordnet wird, wobei an dem Adapter eine Schukosteckdose und zwei Eurosteckdosen angeordnet sind, sodass mittels des Adapters durch das PC-Netzteil noch weitere mit der Schukosteckdose bzw. den Eurosteckdosen verbundene Geräte dann mit Strom versorgt werden, wenn auch der PC mit Strom versorgt wird.

Ein weiteres modulares System gemäß dem Oberbegriff von Anspruch 1 ist aus dem Dokument WO 01/52704 A1 bekannt.

Dieses an sich bekannte Vorgehen ist in verschiedener Hinsicht problematisch und verbesserungswürdig:
Zum einen ist ein so erhaltener Aufbau von elektrischen Kontakten und Verbindungen durch eine große Zahl von elektrischen Kabeln geprägt, die in einer geordneten Weise zu verstauen oft nicht möglich ist. Auf eine solche Weise gebildete elektrische Anschlüsse für elektrische Verbraucher sind daher häufig unansehnlich und wirken unordentlich.

Zum anderen, und dies ist häufig gravierender, ist es bei einer solchen Vorgehensweise insbesondere dann möglich, wenn die Mehrfachsteckdose über eine große Zahl von Einzeldosen verfügt, gleichzeitig eine Vielzahl von elektrischen Verbrauchern anzuschließen und zu betreiben, ohne hierbei eine für die an das Haushaltsstromnetz angeschlossene Steckdose maximal verträgliche angeschlossene elektrische Leistung zu berücksichtigen. Werden hier also Verbraucher mit hoher elektrischer Leistungsaufnahme, wie insbesondere Verbraucher hoher Heizleistung, zum Beispiel Kaffeemaschinen, Wasserkocher, Toaster, gleichzeitig über die Mehrfachsteckdose an eine einzige Haushaltssteckdose angeschlossen und zudem zeitgleich betrieben, so kann dies zu einem übermäßig hohen elektrischen Strom in der mit der elektrischen Haushaltssteckdose verbundenen elektrischen Leitung führen. Im Normalfall und günstigstenfalls bedingt dies eine Auslösen einer elektrischen Sicherung, mit der die Leitung zu der elektrischen Haushaltssteckdose abgesichert ist. In einem ungünstigen Fall, wenn zum Beispiel diese elektrische Sicherung defekt ist oder nicht korrekt anspricht, kann dies aber auch zu einer Überhitzung der elektrischen Zuleitung zu der Haushaltssteckdose und somit zu der Gefahr einer Brandentwicklung führen.

Hier soll mit der vorliegenden Erfindung Abhilfe geschaffen werden, indem ein modulares System der eingangs genannten Art angegeben wird, welches einerseits eine optisch ansprechende und geordnete Anordnung und einen entsprechenden Anschluss elektrischer Verbraucher an die elektrische Anschluss- und Verteilerleiste ermöglicht, andererseits das gleichzeitige Anschließen elektrischer Verbraucher an die elektrische Anschluss- und Verteilerleiste insoweit beschränkt, als dass ein gleichzeitiges Anschließen von Verbrauchern mit einer eine maximal zulässige gesamte elektrische Leistungsaufnahme überschreitenden Leistungsaufnahme nicht möglich ist.

Diese Aufgabe wird erfindungsgemäß gelöst durch ein modulares System, umfassend elektrische Verbraucher und eine elektrische Anschlusseinheit, mit den Merkmalen des Schutzanspruchs 1. Vorteilhafte Weiterbildungen eines solchen modularen Systems sind in den abhängigen Schutzansprüchen 2 bis 6 angegeben.

Bei einem erfindungsgemäßen modularen System, umfassend elektrische Verbraucher und eine elektrische Anschlusseinheit, weist die elektrische Anschlusseinheit zunächst einen Kontaktstecker zum Einführen in eine elektrische Haushaltssteckdose und zum elektrischen Verbinden mit der elektrischen Haushaltssteckdose auf. Die elektrische Anschlusseinheit hat weiterhin eine elektrische Anschluss- und Verteilerleiste und ein die elektrische Anschluss- und Verteilerleiste mit dem Kontaktstecker verbindendes elektrisches Kabel. Weiterhin weisen die elektrischen Verbraucher erste Verbindungselemente, insbesondere jeweils ein erstes Verbindungselement, zum mechanischen und elektrischen Verbinden mit zweiten Verbindungselemente an der elektrischen Anschluss- und Verteilerleiste der elektrischen Anschlusseinheit auf.

Das Besondere an dem erfindungsgemäßen modularen System besteht nun darin, dass die ersten Verbindungselemente an den elektrischen Verbrauchern abhängig von einer maximalen elektrischen Leistungsaufnahme des jeweiligen elektrischen Verbrauchers geometrisch verschieden gestaltet sind und dass die zweiten Verbindungselemente an den elektrischen Anschluss- und Verteilerleiste in einer solchen Weise ebenfalls geometrisch verschieden gestaltet sind, dass ausgewählte der ersten Verbindungselemente nicht mit ausgewählten der zweiten Verbindungselemente verbunden werden können. Weiterhin zeichnet sich die Erfindung dann dadurch aus, dass bei dem modularen System die Art und Anzahl der an der elektrischen Anschluss- und Verteilerleiste vorgesehenen zweiten Verbindungselemente in einer solchen Weise bestimmt ist, dass eine gesamte maximale elektrische Leistungsaufnahme aller an die elektrische Anschluss- und Verteilerleiste gleichzeitig anschließbaren elektrischen Verbraucher auf einen vorgegebenen Maximalwert beschränkt ist.

Mit der Erfindung ist bei dem neuartigen modularen System also insbesondere vorgesehen, dass die Anschluss- und Verteilerleiste der elektrischen Anschlusseinheit dadurch im Hinblick auf den Anschluss elektrischer Verbraucher und eine maximale gesamte elektrische Leistungsaufnahme aller angeschlossenen elektrischen Verbraucher beschränkt ist, dass sie in einer vorgegebenen Anzahl unterschiedliche zweite Verbindungselemente aufweist, die spezifisch nur mit ersten Verbindungselemente an solchen elektrischen Verbrauchern zusammengefügt werden können, die eine vorgegebene maximale elektrische Leistungsaufnahme nicht überschreiten. Mit anderen Worten kann eine elektrische Anschluss- und Verteilerleiste zum Beispiel vier zweite Verbindungselemente aufweisen, von denen zwei mit gleicher Geometrie ausgebildet sind, entsprechend mit korrespondierenden ersten elektrischen Verbindungselementen an elektrischen Verbrauchern mit einer maximalen elektrischen Leistungsaufnahme von zum Beispiel 250 W verbunden werden können, von denen ein weiteres zweites Verbindungselement in einer abweichenden geometrischen Gestaltung gebildet ist und zu ersten Verbindungselementen an solchen elektrischen Verbrauchern passen, die beispielsweise eine maximale elektrische Leitungsaufnahme von jeweils 1000 W aufweisen und von denen ein letztes Verbindungselement in einer nochmals abweichenden geometrischen Gestaltung gebildet ist und zu ersten Verbindungselementen an solchen elektrischen Verbrauchern passt, die beispielsweise eine maximale elektrische Leistungsaufnahme von 2000 W aufweisen. Durch eine solche Maßnahme ist die spezifisch für die Verbindung mit den jeweils ebenfalls spezifisch gestalteten ersten Verbindungselementen der elektrischen Verbraucher des modularen Systems ausgebildete Anschluss- und Verteilerleiste für den Anschluss von elektrischen Verbrauchern mit einer maximalen elektrischen Gesamtleistungsaufnahme von höchstens 3500 W beschränkt, kann entsprechend sichergestellt werden, dass die elektrische Zuleitung zu der Haushaltssteckdose, mit der die erfindungsgemäß in dem System vorhandene elektrische Anschlusseinheit verbunden ist, nicht durch einen Überstrom überlastet wird, auch wenn alle an die Anschluss- und Verteilerleiste angeschlossenen elektrischen Verbraucher gleichzeitig mit maximaler Leistungsaufnahme betrieben werden. Selbstverständlich ist die Erfindung nicht auf eine wie vorstehend beispielhaft beschriebene Aufteilung in unterschiedliche zweite Verbindungselemente an der elektrischen Anschluss- und Verteilerleiste beschränkt und auch nicht auf die beispielhaft genannte maximale Gesamtleistungsaufnahme. Insbesondere wird diese Beschränkung und wird somit auch die Aufteilung zu unterschiedlichen zweiten Verbindungselementen auch von den jeweiligen Auslegungen des elektrischen Haushaltsnetzes und von den Vorschriften in unterschiedlichen Ländern abhängen, in denen das erfindungsgemäße System verwendet werden soll. So kann z.B. vorgesehen sein, eine elektrische Anschlusseinheit mit einer elektrischen Anschluss- und Verteilerleiste so zu bilden, dass diese eine elektrische Leistungsaufnahme von maximal 3680 W (oder etwas darunter, z.B. maximal 3500 W) aufweist, bei 230V/50Hz Spannungsversorgung, wenn diese in Deutschland oder in Frankreich zum Einsatz kommen soll. Denn dort ist die maximale über eine Haushaltsteckdose zu beziehende elektrische Leistung auf diesen Maximalwert beschränkt. Für ein im Vereinigten Königreich zu verwendende elektrische Anschlusseinheit kann die elektrischen Anschluss- und Verteilerleiste hingegen mit Vorteil so gebildet sein, dass sie eine elektrische Leistungsaufnahme von maximal 2990 W (oder etwas darunter, z.B. 2800 W) aufweist, da im Vereinigten Königreich Haushaltsteckdosen nur bis zu einer Leistungsabgabe von maximal 2990 W ausgelegt sind. Für andere Länder können entsprechend andere Obergrenzen der maximalen elektrischen Leistungsaufnahme der insgesamt an die elektrische Anschluss- und Verteilerleiste anschließbaren elektrischen Verbraucher vorgesehen sein. Auch die Aufteilung der zweiten Verbindungselemente und die maximale elektrische Leistungsaufnahme von an das jeweilige Verbindungselement aufgrund der spezifischen geometrischen Ausgestaltung anschließbaren elektrischen Verbraucher kann selbstverständlich variieren und in einem erfindungsgemäßen System je nach Bedarf auch durch entsprechende Gestaltung der ersten Verbindungselemente ausgelegt werden.

Grundsätzlich ist es möglich, dass mehrere geometrisch unterschiedlich gestaltete erste Verbindungselemente mit einem ausgewählten, geometrisch besonders gestalteten zweiten Verbindungselemente verbunden werden können, z.B. solche an elektrischen Verbrauchern, die eine maximale für einen Anschluss an das betreffende zweite Verbindungselement vorgesehene elektrische Leistungsaufnahme nicht überschreiten.

Allerdings kann bei einem erfindungsgemäßen modularen System auch vorgesehen sein, dass die ersten und zweiten Verbindungselemente geometrisch derart gestaltet sind, dass jeweils nur ein passendes der ersten Verbindungselemente mit einem zugehörigen zweiten Verbindungelement verbunden werden kann.

Insbesondere kann vorgesehen sein, dass die ersten Verbindungselemente und die zweiten Verbindungselemente unmittelbar miteinander kontaktiert werden können, ohne dass hier etwa Kabelabschnitte vorzusehen sind. Dies führt zu einer Reduzierung des häufig herkömmlich erhaltenen Gewirrs aus verschiedenen Kabeln und erlaubt eine ordentliche und optisch ansprechende Anordnung und Kontaktierung der einzelnen elektrischen Verbraucher.

Vereinfacht wird das Konzept des erfindungsgemäßen modularen Systems dann, wenn, wie gemäß einer vorteilhaften Weiterbildung der Erfindung vorgeschlagen, die elektrischen Verbraucher abhängig von ihrer maximalen elektrischen Leistungsaufnahme in Gruppen eingeteilt werden und wenn dabei die elektrischen Verbraucher einer Gruppe geometrisch identisch geformte erste Verbindungselemente aufweisen, die elektrischen Verbraucher unterschiedlicher Gruppen geometrisch verschieden gestaltete erste Verbindungselemente aufweisen. Bei einer solchen Lösung können zum Beispiel elektrische Verbraucher mit einer maximalen elektrischen Leistungsaufnahme von bis zu 250 W in eine erste Gruppe eingegliedert werden und - unabhängig von ihrer tatsächlichen maximalen elektrischen Leistungsaufnahme - jeweils identisch geformte erste Verbindungselemente aufweisen. Eine zweite Gruppe von elektrischen Verbrauchern kann zum Beispiel durch solche mit einer maximalen elektrischen Leistungsaufnahme von über 250 W bis zu 1000 W gebildet sein und erste Verbindungselemente in einer zweiten und von der ersten abweichenden geometrischen Gestalt aufweisen. Eine dritte Gruppe von elektrischen Verbrauchern, die noch einmal zu den beiden geometrischen Gestaltungen der Verbindungselemente der elektrischen Verbraucher der ersten beiden Gruppen abweichend gestaltete Verbindungselemente aufweisen, kann dann beispielsweise solche elektrischen Verbraucher umfassen, die eine maximale elektrische Leistungsaufnahme von 1000 W bis 2000 W haben. Für die Auswahl der Anzahl und jeweiligen Art der zweiten Verbindungselemente, die an der elektrischen Anschluss- und Verteilerleiste vorgesehen sind, anhand einer maximal zulässigen gesamten elektrischen Leistungsaufnahme aller angeschlossenen und eventuell gleichzeitig betriebenen elektrischen Verbraucher wird dann jeweils die Obergrenze der elektrischen Leistungsaufnahme der elektrischen Verbraucher in der jeweiligen Gruppe herangezogen. Die vorstehend gegebenen Beispiele für einer Unterteilung der elektrischen Verbraucher in beispielsweise drei Gruppen mit den vorstehend genannten beispielhaften Einteilungen im Hinblick auf die maximale elektrische Leistungsaufnahme sind selbstverständlich nur beispielhaft und können auch anders ausgeführt werden. So können auch mehr als drei Gruppen, können gegebenenfalls auch lediglich zwei Gruppen gebildet werden und können die Grenzen der maximalen elektrischen Leistungsaufnahme der Verbraucher in den jeweiligen Gruppen auch anders gesetzt werden.

Grundsätzlich können die ersten und zweiten Verbindungselemente an den elektrischen Verbrauchern bzw. an der Anschluss- und Verteilerleiste in ihrer Gestalt frei gewählt werden. Insbesondere bevorzugt wird jedoch, wenn ein Typ dieser Verbindungselemente, zum Beispiel die ersten Verbindungselemente, als Verbindungsstecker, ein zweiter Typ, zum Beispiel die zweiten Verbindungselemente, als Einsteckbuchsen gebildet sind. Die unterschiedliche geometrische Ausgestaltung kann zum Beispiel durch leistenförmige Stege an den Steckern und entsprechende Aufnahmenuten in den Einsteckbuchsen gebildet sein, die so angeordnet und geformt sind, dass eine Verbindung eines Steckers einer vorgegebenen geometrischen Form nur mit einer entsprechend passend gebildeten Einsteckbuchse möglich ist.

In einer weiteren möglichen Ausgestaltung des erfindungsgemäßen modularen Systems kann vorgesehen sein, dass die elektrischen Verbraucher eine Aufstellfläche mit einer Seitenerstreckung einer jeweils das erste Verbindungselement tragenden Kontaktseite haben und dass die Seitenerstreckung der Aufstellflächen der elektrischen Verbraucher in einem ganzzahligen Verhältnis zueinander gebildet sind. Eine solche Gestaltung ermöglicht ein einfaches, insbesondere abstandsfreies, modulares Zusammenstellen von nebeneinander aufgestellten elektrischen Verbrauchern, die mit entsprechend positionierten zweiten Verbindungselemente an der Anschluss- und Verteilerleiste verbunden werden können. Weiter vereinheitlicht werden kann eine solche modular aus verschiedenen Verbrauchern aufgebaute Einheit dann, wenn die Aufstellflächen bevorzugt eine rechteckige oder quadratische Grundform aufweisen mit einer Erstreckung in Richtung quer, insbesondere senkrecht zu der Seitenerstreckung, die für die jeweiligen Module gleich ist. Insbesondere dann, wenn, wie dies eine vorteilhafte Weiterbildung der Erfindung vorsieht, die elektrischen Verbraucher elektrische Küchengeräte, wie zum Beispiel Toaster, Wasserkocher, Kaffeemaschine, Eierkocher, Küchenradios, Standmixer, Entsafter oder dergleichen, sind, kann auf diese Weise eine kompakt gebildete Zeile nebeneinander angeordneter und über die Anschluss- und Verteilerleiste kontaktierter elektrischer Verbraucher, hier eben elektrischer Küchengeräte, gebildet werden, die auch optisch ansprechend und raumsparend zum Beispiel auf einer Arbeitsfläche in einer Küche angeordnet und vermittels der erfindungsgemäß gebildeten Anschlusseinheit mit einer einzigen Haushaltssteckdose, insbesondere über ein einziges Zuleitungskabel, nämlich das elektrische Kabel der Anschlusseinheit, verbunden ist.

Mit Vorteil kann die maximale elektrische Leistungsaufnahme aller gleichzeitig an die elektrische Anschluss- und Verteilerleiste anschließbaren elektrischen Verbraucher nicht höher als 3500 Watt sein, können also die an der elektrischen Anschluss- und Verteilerleiste angeordneten zweiten Kontaktelemente hinsichtlich ihrer Anzahl und Art entsprechend so ausgewählt sein, dass die mit jeweils nur zu einem Typus der zweiten Verbindungselemente passenden ersten Verbindungselemente anschließbaren elektrischen Verbraucher in der Summe eine maximale Leistungsaufnahme dieser Höhe nicht überschreiten. In einer solchen Gestaltung ist das erfindungsgemäße System insbesondere für einen Einsatz in Deutschland oder Frankreich geeignet.

Weitere Vorteile und Merkmale der Erfindung ergeben sich aus der nachfolgenden Beschreibung eines Ausführungsbeispiels anhand der beigefügten Figuren. Dabei zeigen:
- Fig. 1: eine schematische Ansicht eines erfindungsgemäßen modularen Systems in einer ersten Perspektive und
- Fig. 2: eine schematische Ansicht des modularen Systems aus Fig. 1 in einer zweiten Perspektive.

In den beiden beigefügten Figuren ist schematisch und keinesfalls maßstabsgerecht oder in konstruktionsgetreuer Darstellung ein mögliches Ausführungsbeispiel eines erfindungsgemäßen modularen Systems, umfassend elektrische Verbraucher und eine elektrische Anschlusseinheit, dargestellt. Die Darstellung in den Figuren ist dabei nicht beschränkend zu verstehen, sondern dient lediglich der Erläuterung. Ein erfindungsgemäßes modulares System kann auch in abweichenden und für den Fachmann ohne weiteres erkennbaren Gestaltungsvarianten umgesetzt werden. Ebenfalls lediglich beispielhaft und nicht beschränkend zu verstehen sind die Angaben zu den elektrischen Leistungsaufnahmen einzelner der genannten elektrischen Verbraucher, die Zuordnung der ersten und zweiten Verbindungselemente in ihrer graphischen Ausgestaltung zu nach der elektrischen Leistungsaufnahme in den genannten Grenzen eingeteilten Gruppen, die genannten Grenzen und auch die sich ergebende maximal in dem System zusammenzufassende und gleichzeitig an eine Haushaltssteckdose anschließbare Konfiguration von elektrischen Verbrauchern und die sich daraus ergebende maximale elektrische Leistungsaufnahme, wenn diese Verbraucher zugleich betrieben werden. Diese Werte werden von einem Fachmann insbesondere anhand der im konkreten Fall geforderten Rahmenbedingungen, wie z.B. die Art der elektrischen Verbraucher oder das Land, in dem das System zum Einsatz kommen soll, und die dortigen Vorgaben in der elektrischen Versorgung und Absicherung von Haushaltssteckdosen, bestimmt und ausgelegt.

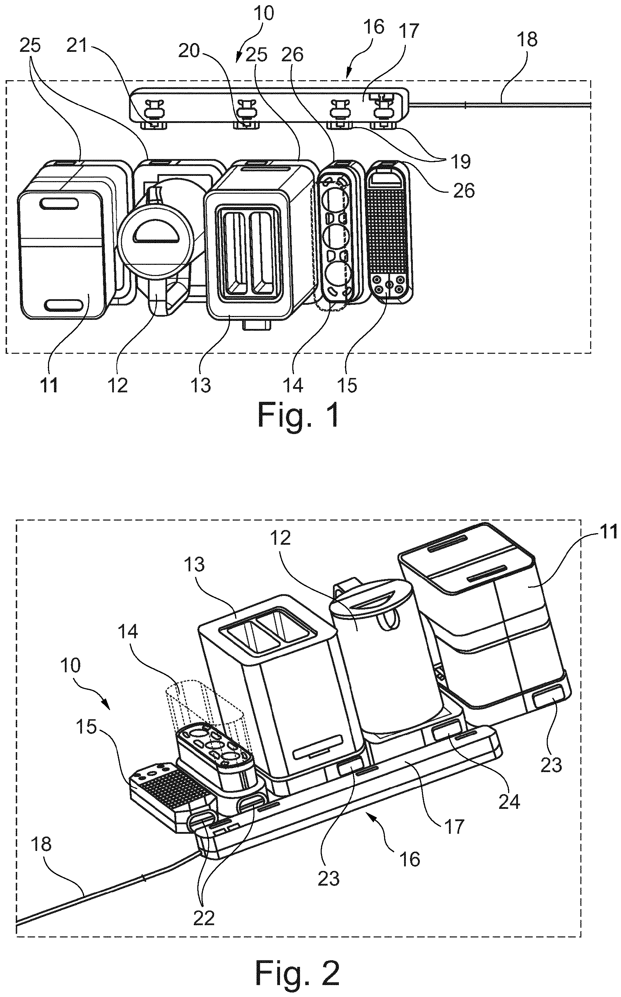

In den Figuren ist in zwei verschiedenen Blickrichtungen, einer Aufsicht in Figur 1 und einer Ansicht schräg von oben hinten in Figur 2, ein erfindungsgemäßes modulares System allgemein mit der Bezugsziffer 10 bezeichnet. Das System 10 beinhaltet mehrere elektrische Verbraucher, im gezeigten Ausführungsbeispiel elektrische Küchengeräte in Form von einer Kaffeemaschine 11, einem Wasserkocher 12, einem Toaster 13, einem Eierkocher 14 und einem Küchenradio 15. Das System 10 beinhaltet ferner eine elektrische Anschlusseinheit 16, die gebildet ist aus einer elektrischen Anschluss- und Verteilerleiste 17, die über ein elektrisches Kabel 18 mit einem üblichen elektrischen Anschlussstecker (nicht gezeigt) zum Verbinden mit einer Haushaltssteckdose verbunden ist.

Die elektrische Anschluss- und Verteilerleiste 17 hat im gezeigten Ausführungsbeispiel insgesamt vier zweite Verbindungselemente in Form von Verbindungssteckern 19, 20, 21. Dabei sind die Verbindungsstecker 19 mit einer identischen Geometrie geformt, unterscheiden sich in der Geometrie allerdings von den Verbindungssteckern 20 und 21, die ihrerseits ebenfalls mit einer voneinander abweichenden Geometrie gebildet sind.

Die elektrischen Verbraucher (Kaffeemaschine 11, Wasserkocher 12, Toaster 13, Eierkocher 14 und Küchenradio 15) weisen jeweils erste Verbindungselemente in Form von Einsteckbuchsen 22, 23, 24 auf. Dabei sind die Einsteckbuchsen 22 geometrische so geformt, dass sie mit allen Verbindungssteckern 19, 20, 21 verbunden und elektrisch kontaktiert werden können. Die Einsteckbuchsen 23 passen ausschließlich mit den Verbindungssteckern 20, 21, nicht aber mit den Verbindungssteckern 19, zusammen. Die Einsteckbuchse 24 ist geometrisch so gebildet, dass sie nur mit dem Verbindungsstecker 21 zusammengeführt und kontaktiert werden kann.

Diese unterschiedliche geometrische Gestaltung der Einsteckbuchsen 22, 23, 24 ist vorgenommen anhand einer Gruppierung der mit diesen versehenen elektrischen Verbraucher, bestimmt nach deren maximaler elektrischer Leistungsaufnahme. In einer ersten Gruppe, zu der das Küchenradio 15 unter Eierkocher 14 zählen, haben die Geräte eine geringe maximale elektrische Leistungsaufnahme von z.B. etwa 250 W. Eine zweite Gruppe, zu der der Toaster 13 und Kaffeemaschine 11 gehören umfasst Geräte mit einer mittleren maximalen elektrischen Leistungsaufnahme von z.B. ca. 1000 W (Kaffeemaschine 11) bzw. ca. 900 W (Toaster 13). Zu einer dritten Gruppe gehört allein der Wasserkocher, der eine hohe maximale elektrische Leistungsaufnahme von z.B. etwa 2000 W hat. Die elektrische Anschluss- und Verteilerleiste 17 ist also mit ihren vier Verbindungssteckern 19, 20, 21 so gestaltet, dass an diese insgesamt elektrische Verbraucher mit einer maximalen elektrischen Gesamtleistungsaufnahme von etwa 3500 W angeschlossen werden können. Dies wird durch einerseits die Anzahl der an der elektrischen Anschluss- und Verteilerleiste 17 angeordneten Verbindungsstecker 19, 20, 21 sowie durch deren jeweilige geometrische Gestaltung bestimmt, die ein Verbinden lediglich mit passenden Einsteckbuchsen 22, 23, 24 der jeweils zugeordneten elektrischen Verbrauchern aus den vorstehend bezeichneten Gruppen zulässt, wobei Einsteckbuchsen 22 an Verbrauchern mit niedriger elektrischer Leistungsaufnahme mit den für den Anschluss solcher eine geringe elektrische Leistung abnehmender Verbraucher spezifisch ausgelegten Verbindungssteckern 19, aber auch mit für den Anschluss von Verbrauchern mit höherer (mittlerer oder hoher) Leistungsaufnahme vorgesehenen Verbindungssteckern 20 und 21 verbunden werden können. Elektrische Verbraucher mit höherer Leistungsaufnahme können hingegen mit ihren Anschlussbuchsen 23, 24 nicht an Verbindungsstecker 19 für elektrische Verbraucher mit niedriger maximaler elektrischer Leistungsaufnahme angeschlossen werden.

In den Figuren sind insgesamt fünf elektrische Verbraucher, hier elektrische Küchengeräte, gezeigt. Damit soll dargestellt werden, dass in dem System ein modularer Aufbau und eine modulare Zusammenstellung möglich ist. So können zum Beispiel an die beiden Verbindungsstecker 19 der elektrischen Anschluss- und Verteilerleiste 17 der Eierkocher 14 und das Küchenradio 15 angeschlossen werden. An den Verbindungsstecker 20 kann beispielsweise der Toaster 13 angeschlossen werden, alternativ aber auch, da diese im Hinblick auf die Gruppierung zur selben Leistungsgruppe gehört und damit eine identische Einsteckbuchse 23 aufweist, die Kaffeemaschine 11. An den Verbindungsstecker 20 können aber auch der Eierkocher 14 oder das Küchenradio 15 angeschlossen werden, da diese elektrischen Verbraucher eine gegenüber dem Toaster 13 bzw. der Kaffeemaschine 11 geringere maximale Leistungsaufnahme haben. Nur der Verbindungsstecker 21 lässt eine Verbindung mit dem Wasserkocher 12, der die höchste maximale elektrische Leistungsaufnahme hat, zu. An den Verbindungsstecker 21 können aber auch alle anderen Geräte, also Kaffeemaschine 11, Toaster 13, Eierkocher 14, Küchenradio 15, angeschlossen werden. Es kann in einigen Fällen aber auch vorgesehen sein, dass der Wasserkocher 12 auch an den Verbindungsstecker 20 angeschlossen werden kann. Dies kann insbesondere der Fall sein, wenn in dem System insgesamt lediglich ein Verbraucher mit einer hohen elektrischen Leistungsaufnahme wie der Wasserkocher 12 vorhanden ist, so dass es schon aus diesem Grund nicht möglich ist, einen weiteren Verbraucher mit so hoher elektrischer Leistungsaufnahme an den Verbindungsstecker 21 anzuschließen und so eine zu hohe Gesamtleistungsaufnahme zu erhalten. B einer solchen Gestaltung kann dann eine höhere Freiheit der möglichen Positionierung der Küchengeräte 11, 12, 13, 14, 15 erhalten werden.

Eine weitere Besonderheit der in dem Ausführungsbeispiel gezeigten Zusammenstellung des erfindungsgemäßen Systems 10 ist der Umstand, dass die jeweilige Endverbraucher in Form der elektrischen Küchengeräte (Kaffeemaschine 11, Wasserkocher 12, Toaster 13, Eierkocher 14, Küchenradio 15) jeweils im Wesentlichen rechteckige Aufstellflächen 25, 26 aufweisen, wobei die Aufstellflächen 25 von Kaffeemaschine 11, Wasserkocher 12, Toaster 13 eine identische Seitenerstreckung entlang ihrer Kante, in der die jeweilige Einsteckbuchse 23, 24 angeordnet ist, aufweisen. Die Aufstellflächen 26 von Eierkocher 14 und Küchenradio 15 sind ebenfalls gleich gebildet, weisen jedoch eine kürzere Seitenerstreckung entlang derjenigen Kante, an der diese ihre Einsteckbuchsen 22 aufweisen, auf als die anderen Küchengeräte. Dabei beträgt die Seitenerstreckung der Aufstellflächen 26 genau die Hälfte der Seitenerstreckung der Aufstellflächen 25. In der Richtung senkrecht zu der Seitenerstreckung sind die Aufstellflächen 25, 26 gleich lang gebildet. Hierdurch kann eine kompakte, nebeneinander abstandsfrei angeordnete Reihe von Küchengeräten gebildet werden, die über die elektrische Anschluss- und Verteilerleiste 17 kontaktiert werden kann.

Es ist hier noch einmal darauf hinzuweisen, dass die in der vorstehenden Beschreibung eines Ausführungsbeispiels bezeichneten Angaben zu den Leistungsaufnahmen der beispielhaft genannten elektrischen Verbraucher bloß beispielhaft sind und allein dem Zweck dienen, die Erfindung weiter zu veranschaulichen. Selbstverständlich können hier auch andere Arten von elektrischen Verbrauchern mit anderen Leistungsaufnahmen oder auch wie vorstehend genannte elektrische Verbraucher in Form von elektrischen Küchengeräten mit anderen Leistungsaufnahmen verwendet werden, ohne von der Erfindung abzuweichen. So kann z.B. ein Wasserkocher 12 nicht 2000 W, sondern z.B. lediglich 1900 W oder 1800 W elektrische Leistung aufnehmen oder noch andere Werte, ggf. zwischen den genannten liegende, noch höhere oder noch niedrigere. Gleiches gilt analog auch für die anderen in vorstehendem Beispiel angeführten elektrischen Küchengeräte, Toaster 13, Kaffeemaschine 11, Eierkocher 14 und Küchenradio 15.

### Bezugszeichenliste

- 10: System
- 11: Kaffeemaschine
- 12: Wasserkocher
- 13: Toaster
- 14: Eierkocher
- 15: Küchenradio
- 16: elektrische Anschlusseinheit
- 17: elektrische Anschluss- und Verteilerleiste
- 18: elektrisches Kabel
- 19: Verbindungsstecker
- 20: Verbindungsstecker
- 21: Verbindungsstecker
- 22: Einsteckbuchse
- 23: Einsteckbuchse
- 24: Einsteckbuchse
- 25: Aufstellfläche
- 26: Aufstellfläche

## Patentansprüche

1. Modulares System (10) umfassend elektrische Verbraucher (11, 12, 13, 14, 15) und eine elektrische Anschlusseinheit (16), wobei die elektrische Anschlusseinheit (16) einen Kontaktstecker zum Einführen in eine elektrische Haushaltssteckdose und zum elektrischen Verbinden mit der elektrischen Haushaltssteckdose, eine elektrische Anschluss- und Verteilerleiste (17) sowie ein die elektrische Anschluss- und Verteilerleiste (17) mit dem Kontaktstecker verbindendes elektrisches Kabel (18) aufweist, wobei die elektrischen Verbraucher (11, 12, 13, 14, 15) erste Verbindungselemente (22, 23, 24) zum mechanischen und elektrischen Verbinden mit zweiten Verbindungselementen (19, 20, 21) an der elektrischen Anschluss- und Verteilerleiste (17) aufweisen, **dadurch gekennzeichnet, dass** die ersten Verbindungselemente (22, 23, 24) an den elektrischen Verbrauchern (11, 12, 13, 14, 15) abhängig von einer maximalen elektrischen Leistungsaufnahme des jeweiligen elektrischen Verbrauchers (11, 12, 13, 14, 15) geometrisch verschieden gestaltet sind und dass die zweiten Verbindungselemente (19, 20, 21) an der elektrischen Anschluss- und Verteilerleiste (17) in einer solchen Weise ebenfalls geometrisch verschieden gestaltet sind, dass ausgewählte der ersten Verbindungselemente (22, 23, 24) nicht mit ausgewählten der zweiten Verbindungselemente (19, 20, 21) verbunden werden können, wobei die Art und Anzahl der an der elektrischen Anschluss- und Verteilerleiste (17) vorgesehenen zweiten Verbindungselemente (19, 20, 21) so bestimmt ist, dass eine gesamte maximale elektrische Leistungsaufnahme aller an die elektrische Anschluss- und Verteilerleiste (17) gleichzeitig anschließbaren elektrischen Verbraucher (11, 12, 13, 14, 15) auf einen vorgegebenen Maximalwert beschränkt ist.

2. Modulares System nach Anspruch 1, **dadurch gekennzeichnet, dass** die ersten (22, 23, 24) und die zweiten (19, 20, 21) der Verbindungselemente geometrisch so gestaltet sind, dass jeweils nur ein passendes der ersten Verbindungselemente (22, 23, 24) mit einem zugehörigen zweiten Verbindungselement (19, 20, 21) verbunden werden kann.

3. Modulares System (10) nach einem der vorhergehenden Ansprüche, **dadurch gekennzeichnet, dass** die elektrischen Verbraucher (11, 12, 13, 14, 15) abhängig von ihrer maximalen elektrischen Leistungsaufnahme in Gruppen eingeteilt sind, wobei die elektrischen Verbraucher (11, 12, 13, 14, 15) einer Gruppe geometrisch identisch geformte erste Verbindungselemente (22, 23, 24) aufweisen, die elektrischen Verbraucher (11, 12, 13, 14, 15) unterschiedlicher Gruppen geometrisch verschieden gestaltete erste Verbindungselemente (22, 23, 24) aufweisen.

4. Modulares System (10) nach einem der vorhergehenden Ansprüche, **dadurch gekennzeichnet, dass** die ersten Verbindungselemente (22, 23, 24) als Einsteckbuchsen, die zweiten Verbindungselemente (19, 20, 21) als Stecker ausgeführt sind.

5. Modulares System (10) nach einem der vorhergehenden Ansprüche, **dadurch gekennzeichnet, dass** die elektrischen Verbraucher (11, 12, 13, 14, 15) eine Aufstellfläche (25, 26) mit einer Seitenerstreckung einer jeweils das erste Verbindungselement (22, 23, 24) tragenden Kontaktseite haben und dass die Seitenerstreckungen der Aufstellflächen (25, 26) der elektrischen Verbraucher (11, 12, 13, 14, 15) in einem ganzzahligen Verhältnis zueinander gebildet sind.

6. Modulares System (10) nach einem der vorhergehenden Ansprüche, **dadurch gekennzeichnet, dass** die maximale elektrische Leistungsaufnahme aller gleichzeitig an die elektrische Anschluss- und Verteilerleiste (17) anschließbaren elektrischen Verbraucher (11, 12, 13, 14, 15) nicht höher ist als 3500 Watt.

7. Modulares System (10) nach einem der vorhergehenden Ansprüche, **dadurch gekennzeichnet, dass** die elektrischen Verbraucher (11, 12, 13, 14, 15) elektrische Küchengeräte sind.

## Claims

1. A modular system (10) comprising electrical consumers (11, 12, 13, 14, 15) and an electrical connection unit (16), wherein the electrical connection unit (16) has a contact plug for insertion into a mains electrical socket and for electrical connection to the mains electrical socket, an electrical connection and distribution strip (17) and an electrical cable (18) connecting the electrical connection and distribution strip (17) to the contact plug, wherein the electrical consumers (11, 12, 13, 14, 15) have first connecting elements (22, 23, 24) for mechanical and electrical connection to second connecting elements (19, 20, 21) on the electrical connection and distribution strip (17), **characterised in that** the first connecting elements (22, 23, 24) on the electrical consumers (11, 12, 13, 14, 15) are designed geometrically differently depending on a maximum electrical power consumption of the respective electrical consumer (11, 12, 13, 14, 15) and **in that** the second connecting elements (19, 20, 21) on the electrical connection and distribution strip (17) are also designed geometrically differently in such a manner, that selected ones of the first connecting elements (22, 23, 24) cannot be connected to selected ones of the second connecting elements (19, 20, 21), the type and number of the second connecting elements (19, 20, 21) provided on the electrical connection and distribution strip (17) being so determined, that a total maximum electrical power consumption of all electrical consumers (11, 12, 13, 14, 15) that can be connected simultaneously to the electrical connection and distribution strip (17) is limited to a predetermined maximum value.

2. A modular system according to claim 1, **characterised in that** the first (22, 23, 24) and the second (19, 20, 21) of the connecting elements are geometrically designed in such a way that in each case only one matching one of the first connecting elements (22, 23, 24) can be connected to an associated second connecting element (19, 20, 21).

3. A modular system (10) according to one of the preceding claims, **characterised in that** the electrical consumers (11, 12, 13, 14, 15) are divided into groups depending on their maximum electrical power consumption, the electrical consumers (11, 12, 13, 14, 15) of one group having geometrically identically shaped first connecting elements (22, 23, 24), the electrical consumers (11, 12, 13, 14, 15) of different groups having geometrically differently shaped first connecting elements (22, 23, 24).

4. A modular system (10) according to one of the preceding claims, **characterised in that** the first connecting elements (22, 23, 24) are designed as plug-in sockets and the second connecting elements (19, 20, 21) are designed as plugs.

5. A modular system (10) according to one of the preceding claims, **characterised in that** the electrical consumers (11, 12, 13, 14, 15) have a mounting surface (25, 26) with a lateral extension of a contact side carrying the first connecting element (22, 23, 24) in each case, and **in that** the lateral extensions of the mounting surfaces (25, 26) of the electrical consumers (11, 12, 13, 14, 15) are formed in an integer ratio to one another.

6. A modular system (10) according to one of the preceding claims, **characterised in that** the maximum electrical power consumption of all electrical consumers (11, 12, 13, 14, 15) which can be connected simultaneously to the electrical connection and distribution strip (17) is not higher than 3500 watts.

7. A modular system (10) according to one of the preceding claims, **characterised in that** the electrical consumers (11, 12, 13, 14, 15) are electrical kitchen appliances.

## Revendications

1. Système modulaire (10) comprenant des consommateurs électriques (11, 12, 13, 14, 15) et une unité de raccordement électrique (16), dans lequel l'unité de raccordement électrique (16) comporte une fiche de contact à insérer dans une prise de courant et à raccorder électriquement à la prise de courant, une barrette de raccordement et de distribution électrique (17) et un câble électrique (18) reliant la barrette de raccordement et de distribution électrique (17) à la fiche de contact, dans lequel les consommateurs électriques (11, 12, 13, 14, 15) présentent des premiers éléments de raccordement (22, 23, 24) pour la raccordement mécanique et électrique aux seconds éléments de raccordement (19, 20, 21) sur la bande de raccordement et de distribution électrique (17), **caractérisé en ce que** les premiers éléments de raccordement (22, 23, 24) sur les consommateurs électriques (11, 12, 13, 14, 15) sont conçus de manière différente sur le plan géométrique, en fonction d'une consommation électrique maximale du consommateur électrique respective (11, 12, 13, 14, 15) et **en ce que** les seconds éléments de raccordement (19, 20, 21) sur la bande de raccordement et de distribution électrique (17) sont également conçus de manière différente sur le plan géométrique de telle sorte que certains des premiers éléments de raccordement (22, 23, 24) ne peuvent pas être connectés à certains des seconds éléments de raccordement (19, 20, 21), 20, 21), le type et le nombre des seconds éléments de raccordement (19, 20, 21) prévus sur la bande de raccordement et de distribution électrique (17) étant déterminés de manière à limiter à une valeur maximale prédéterminée la consommation électrique totale de toutes les consommateurs électriques (11, 12, 13, 14, 15) qui peuvent être connectées simultanément à la bande de raccordement et de distribution électrique (17).

2. Système modulaire selon la revendication 1, **caractérisé par le fait que** le premier (22, 23, 24) et le second (19, 20, 21) des éléments de raccordement sont conçus géométriquement de manière à ce que, dans chaque cas, un seul des premiers éléments de raccordement (22, 23, 24) puisse être connecté à un second élément de raccordement associé (19, 20, 21).

3. Système modulaire (10) selon l'une des revendications précédentes, **caractérisé en ce que** les consommateurs électriques (11, 12, 13, 14, 15) sont réparties en groupes en fonction de leur puissance électrique maximale absorbée, les consommateurs électriques (11, 12, 13, 14, 15) d'un groupe ayant des premiers éléments de raccordement (22, 23, 24) de forme géométrique identique, les consommateurs électriques (11, 12, 13, 14, 15) de groupes différents ayant des premiers éléments de raccordement (22, 23, 24) de forme géométrique différente.

4. Système modulaire (10) selon l'une des revendications précédentes, **caractérisé par le fait que** les premiers éléments de raccordement (22, 23, 24) sont conçus comme des prises enfichables et que les seconds éléments de raccordement (19, 20, 21) sont conçus comme des fiches.

5. Système modulaire (10) selon l'une des revendications précédentes, **caractérisé en ce que** les consommateurs électriques (11, 12, 13, 14, 15) ont une surface de montage (25, 26) avec une extension latérale d'un côté de contact portant le premier élément de raccordement (22, 23, 24) dans chaque cas, et **en ce que** les exten-sions latérales des surfaces de montage (25, 26) des consommateurs électriques (11, 12, 13, 14, 15) sont formées dans un rapport entier l'une par rapport à l'autre.

6. Système modulaire (10) selon l'une des revendications précédentes, **caractérisé par le fait que** la consommation électrique maximale de tous les consommateurs électriques (11, 12, 13, 14, 15) pouvant être connectés simultanément à la bande de raccordement et de distribution électrique (17) ne dépasse pas 3500 watts.

7. Système modulaire (10) selon l'une des revendications précédentes, **caractérisé par le fait que** les consommateurs électriques (11, 12, 13, 14, 15) sont des appareils électriques de cuisine.
